# EUROPÄISCHE PATENTSCHRIFT

(11) **EP 1 092 379 B1**
(45) Veröffentlichungstag und Bekanntmachung des Hinweises auf die Patenterteilung: **05.03.2003**
(21) Anmeldenummer: 00116354.2
(22) Anmeldetag: 28.07.2000
(51) Int. Cl.: A47J 43/08

(54) **Elektrisch betriebener Handrührer**
Electrically operated hand mixer
Mixeur à main électrique

(30) Priorität: 20.08.1999 DE 19939507
(43) Veröffentlichungstag der Anmeldung: 18.04.2001
(73) Patentinhaber: Braun GmbH, 61476 Kronberg (DE)
(72) Erfinder: Masip, Josep-Maria, 08190 Sant Cugat del Vallés (Barcelona) (ES); Penaranda, Mariano, 08005 Barcelona (ES); Rafols, Robert, 08100 Sant Fost de Campcentelles (Barc.) (ES); Rebordosa, Antonio, Brucardes, 08272 Sant Fruitos de Bages (ES)

(56) Entgegenhaltungen:
- DE-A- 2 802 155
- US-A- 3 821 902

## Beschreibung

Die Erfindung betrifft einen elektrisch betriebenen Handrührer nach dem Oberbegriff des Anspruchs 1. Ein derartiger Handrührer ist aus US-A-3 821 902 bekannt.

Ein weiterer Handrührer ist aus der europäischen Patentschrift 0 529 266 B1 bekannt. Bei dem dort beschriebenen elektrisch betriebenen Handrührer wird durch elektrische Schaltmittel sichergestellt, daß entsprechend der Wahl der Arbeitswerkzeuge entweder eine Dauerbetriebsart oder eine Kurzzeitbetriebsart selbsttätig eingestellt wird. Es sind am Handrührer gleiche Werkzeugaufnahmen für ein Knet- oder Rührwerkzeug und eine weitere Werkzeugaufnahme für einen eine Messerklinge aufweisenden Pürierstab vorgesehen.

Als erstes elektrisches Schaltmittel dient ein Hauptschalter, der zum einen in mehrere Dauergeschwindigkeitsstufen I bis III und zum anderen zusätzlich noch in eine Momentstufe IL einstellbar ist. Während bei im Handrührer eingesetzten Knet- oder Rührwerkzeugen alle Betriebsstufen möglich sind, kann beim Einsetzen eines Pürierstabes in die hierfür vorgesehene Werkzeugaufnahme - diese ist örtlich von der Werkzeugaufnahme der Knet- oder Rührwerkzeuge getrennt - der Hauptschalter zwar in die einzelnen Geschwindigkeitsstufen verstellt werden, der Antriebsmotor läßt sich allerdings nur in der Kurzzeitschaltstufe einschalten, und dies insbesondere deshalb, weil ein zweites elektrisches Schaltmittel beim Einsetzen des Pürierstabes den Hauptschalter in seinen Dauergeschwindigkeitsstufen elektrisch blockiert, um Verletzungen an der Messerklinge bei unsachgemäßer Handhabung zu vermeiden.

Bei einem aus der DE 79 02 965 U1 bekannten Handrührer läßt sich durch eine unmittelbar neben einem Auslöseglied angeordnete Schalteinrichtung und einem quer dazu angeordneten Schaltglied erreichen, daß alle drei Einrichtungen mit entsprechenden Anschlägen und Gegenanschlägen in eine gegenseitige Wirkverbindung treten können. Diese Wirkverbindung kann in einer ersten Drehstellung des Auslöseglieds dieses selbst in seiner axialen Verstellung blockieren und gleichzeitig die Verstellung des Schaltglieds zulassen. In einer zweiten Drehstellung des Auslöseglieds läßt dieses dann seine axiale Verstellung zu und blockiert gleichzeitig die Verstellung des Schaltgliedes. Auf diese Weise wird bei dem beschriebenen Handrührer durch die besondere Ausbildung von Schaltglied und Auslöseglied erreicht, daß entweder nur das Schaltglied zum Einschalten des Handrührers verstellt werden kann oder nur die Verstellung des Auslösegliedes freigegeben ist, welches dann bei seiner Betätigung in axialer Richtung die Knet- oder Rührwerkzeuge auswirft. Das Auslöseglied ist als geschlitzte Hülse ausgebildet, wobei in seiner einen Drehstellung (Einschaltstellung) das Schaltglied zu seiner Verschiebung in den Schlitz eingreifen kann und in seiner um 90° gedrehten Stellung (Auswerfstellung) das Schaltglied in seiner Bewegung blockiert.

Bei diesem Handmixer ist weiterhin noch, wenn er als Schneidmesser benutzt werden soll, eine Momentstufe M vorgesehen, die das Gerät nur solange eingeschaltet läßt, solange eine Bedienungsperson das Schaltglied heruntergedrückt hält. Dabei muß das Auslöseglied zuvor in eine derartige Drehstellung gebracht werden, daß einerseits hierdurch ein weiteres Sperrglied in Wirkverbindung mit dem Schaltglied gebracht wird und so das Einschalten der Dauereinschaltstellungen I bis III verhindert. Andererseits ist ebenso ein Auswerfen des Schneidmessers nicht möglich ist, weil in der Momentstufe M das Schaltglied in den Schlitz des Auslösegliedes hineinragt und so seine axiale Verschiebung des Auslösegliedes verhindert.

Es ist Aufgabe der Erfindung, einen elektrisch betriebenen Handrührer der eingangs genannten Art zu schaffen, bei dem mit einfachen und kostengünstigen Mitteln entweder ein Dauerbetrieb oder ein Kurzzeit- bzw. Momentbetrieb einstellbar ist, wobei allerdings diese Betriebsarten dadurch gesteuert werden sollen, ob Rühr- bzw. Knetwerkzeuge oder ein Schneidmesser (Pürierstab) im Gerät eingesetzt ist.

Diese Aufgabe wird durch einen Handrührer nach dem Anspruch 1 gelöst. Bei dem erfindungsgemäßen Handrührer sind der Dauerbetrieb und der Kurzzeitbetrieb unabhängig voneinander an unterschiedlichen Schaltorganen einstellbar. Diese beiden Schaltorgane sind mechanisch gegenseitig verriegelt. Hierzu sind die beiden Schaltorgane und das Auslöseglied zum Zwecke der gegenseitigen Verriegelung miteinander gekoppelt. Dies stellt einerseits eine besonders zuverlässige und sichere Verriegelung des Dauerbetriebs und des Kurzzeitbetriebs dar, die andererseits besonders einfach und damit kostengünstig herstellbar ist.

Durch die erfindungsgemäße ausschließlich mechanische Wirkverbindung zwischen dem Auslöseglied und den ersten und zweiten Schaltorganen wird erreicht, daß die Schaltfunktion für den Dauerbetrieb des Rühr- oder Knethakens und die Schaltfunktion für den Kurzzeitbetrieb des Pürierstabs von den ersten und zweiten Schaltorganen getrennt ausgeführt werden. Das erste Schaltorgan kann nur dann zur Aktivierung des Dauerbetriebs betätigt werden, wenn ein Rühr- oder Knethaken eingesteckt ist und sich damit das Auslöseglied in seiner oberen Position befindet. Dabei wird gleichzeitig die Betätigung des zweiten Schaltorgans verhindert. Das zweite Schaltorgan kann nur dann zur Betätigung des Kurzzeitbetriebs betätigt werden, wenn kein Knet- oder Rührhaken in die entsprechende Werkzeugaufnahme eingesteckt ist, wobei gleichzeitig die Betätigung des ersten Schaltorgans zur Aktivierung des Dauerbetriebs blockiert ist. Schließlich kann das Auslöseglied bei aktiviertem Dauerbetrieb nicht betätigt werden, um einen eingesteckten Rühr- oder Knethaken auszuwerfen.

Die die gegenseitigen Wirkverbindungen herstellenden Verriegelungsglieder bestehen aus einfachen Vorsprüngen und entsprechenden Bohrungen oder Ausnehmungen an bzw. in dem Auslöseglied, dem ersten Schaltorgan und dem zweiten Schaltorgan.

Durch die Merkmale des Patentanspruchs 2 ist das Auslöseglied in seiner Längsrichtung axial verschiebbar, wobei die Verschiebung nach oben durch das Einsetzen der Rühr- oder Knetwerkzeuge erfolgt. Eine Verschiebung des Auslösegliedes nach unten wird beim Auswerfvorgang der Rühr- oder Knetwerkzeuge eingeleitet, indem von oben her auf den Auslöseknopf des Auslösegliedes gedrückt wird. Bei eingesetzten Rühr- oder Knetwerkzeugen fluchten dabei die Verriegelungsglieder des Auslösegliedes und des Schaltorgans miteinander, so daß das Schaltorgan in seine Betriebsstufen geschaltet werden kann. In dieser Stellung ist ein Auswerfen der Rühr- oder Knetwerkzeuge nicht möglich. Bei ausgeworfenen Rühr- oder Knetwerkzeugen ist das Auslöseglied so weit von dem Verriegelungsglied des Schaltorgans entfernt, daß dieses bei Verschiebung des Schaltorganes letzteres in seiner Bewegung blockiert und ein Einschalten nicht möglich ist. In dieser Stellung kann nur das Kurzzeitschaltorgan betätigt werden, das wiederum mit einem Verriegelungsglied des Schaltgliedes fluchtet. (Patentanspruch 3)

Durch die Merkmale des Patentanspruchs 4 läßt sich das erste Schaltorgan in Längsrichtung der Oberfläche des Gehäuses des Handrührers verschieben, was eine besonders einfache Handhabung darstellt.

Die Merkmale des Patentanspruchs 5 ermöglichen sowohl eine Längsverschiebung des ersten Schaltorgans zur Oberfläche des Handrührers und gleichzeitig eine senkrecht zur Oberfläche verlaufende Verschiebung des zweiten Schaltorgans. Diese beiden senkrecht aufeinander stehenden Bewegungsrichtungen der beiden Schaltorgane ermöglichen eine leichte Handhabung, ohne daß diese Bewegungen zum Verschieben der Schaltorgane besondere Erklärungen an eine Bedienungsperson bedürfen.

Die Merkmale des Patentanspruchs 6 führen zu einer besonders einfachen, leicht herzustellenden mechanischen Ausführung der Verriegelungseinrichtung. An dieser Stelle sei noch erwähnt, daß die die beiden Schaltorgane betätigenden elektrischen Schalter in der Zeichnung der Einfachheit halber nicht dargestellt sind, weil sie nicht in dieser Ebene zu erkennen sind. Auch sind die Führungen der Schaltorgane im Gehäuse nicht im Detail gezeigt. Dies gilt auch für den Motor, das Getriebe, Kabel und sonstige Innereien eines Handrührers.

Die Merkmale der Patentansprüche 7 bis 9 führen zu besonders einfachen Ausführungsformen des zweiten Schaltorgans, ohne daß hierfür aufwendige Bauteile erforderlich wären.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

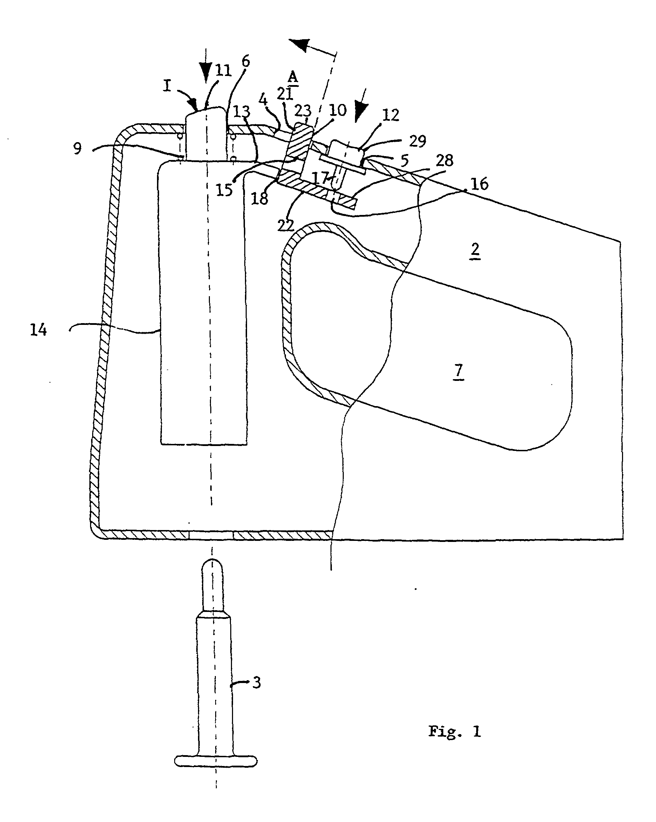

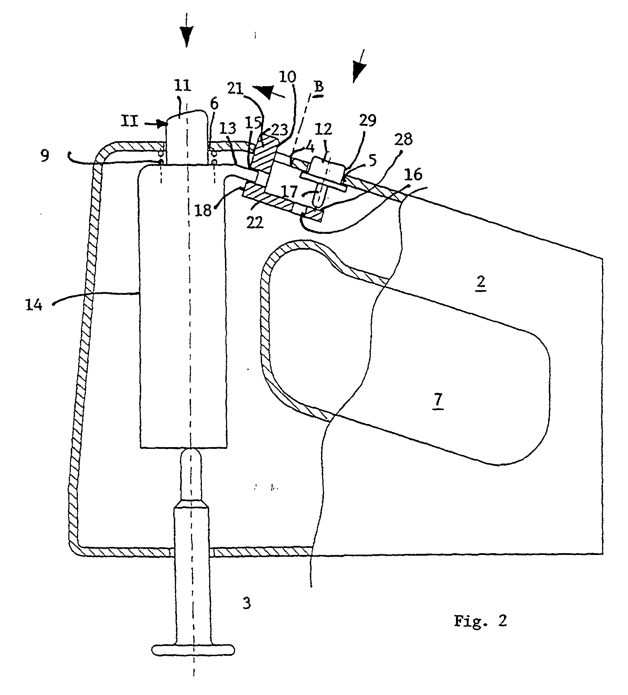

Die Figuren 1 und 2 zeigen schematisch und teilweise geschnitten eine Seitenansicht eines erfindungsgemäßen Handrührers in einer ersten und einer zweiten Betriebsstellung.

In der nachstehenden Beschreibung sind die Lageangaben "senkrecht", "waagrecht", "oben" und "unten" auf die in den Figuren 1 und 2 dargestellte Lage des Handrührers bezogen.

In Fig. 1 ist ein Handrührer dargestellt, der im wesentlichen aus einem Gehäuse 2 und einem als Durchgriff für die Hand eines Benutzers dienenden Freiraum 7 besteht. Ferner enthält das Gehäuse 2 in seinem linken vorderen Abschnitt das in senkrechter Richtung verstellbare Auslöseglied 14 und in seinem oberen Abschnitt das etwa quer zur Verstellrichtung des Auslöseglieds 14 verstellbare erste Schaltorgan 10 und das senkrecht zur Verstellrichtung des ersten Schaltorgans 10 verstellbare zweite Schaltorgan 12.

Das erste Schaltorgan 10 ist dazu vorgesehen, einen Antrieb für einen Dauerbetrieb eines langsam laufenden Werkzeugs, z.B. eines Rühr- oder Knethakens ein- und auszuschalten. Das erste Schaltorgan 10 kann hierzu in zwei Schaltstellungen bleibend geschaltet werden. Das zweite Schaltorgan 12 ist dazu vorgesehen, einen Antrieb für einen Kurzzeitbetrieb eines schnell laufenden Werkzeugs, z.B. eines Pürierstabs ein- und auszuschalten. Das zweite Schaltorgan 12 ist als Tastschalter ausgebildet, der in die eingeschaltete Stellung gedrückt werden muß.

Das Auslöseglied 14 steht in Fig. 1 in einer unteren Ruheposition I, in der ein im unteren Teil der Fig. 1 schematisch angedeuteter Rühr- oder Knethaken 3 nicht eingesteckt ist. Das Auslöseglied 14 weist einen oberen Auslöseknopf 11 auf, der durch eine Bohrung 6 der Oberfläche des Gehäuses 2 herausragt. Ein Federelement 9 übt eine Vorspannung auf das Auslöseglied 14 nach unten in die in Fig. 1 gezeigte Ruheposition I aus.

Das Auslöseglied 14 ist an seinem oberen Ende mit einem als erstes Verriegelungsglied 13 fungierenden Vorsprung versehen, der in die Verstellrichtung des ersten Schaltorgans 10 abgewinkelt ist.

Ferner ist das Auslöseglied 14 mit einer Werkzeugaufnahme gekoppelt, in der der Rühroder Knethakens 3 aufgenommen werden kann. Eine weitere Werkzeugaufnahme zur Halterung eines ein rotierendes Messer aufweisenden Pürierstabs ist ebenfalls in dem Gehäuse 2 vorhanden. Diese einen Pürierstab aufnehmende zweite Werkzeugaufnahme ist koaxial oder an einer anderen Stelle im Gehäuse 2 und gegebenenfalls auch in einer anderen axialen Lage als die den Knet- oder Rührhaken 3 aufnehmende Werkzeugaufnahme angeordnet.

Das erste Schaltorgan 10 ist einstückig und winkelförmig ausgebildet und ist etwa parallel zur angrenzenden Oberfläche des Gehäuses 2 verstellbar gelagert. Das erste Schaltorgan 10 weist einen ersten Schenkel 21 auf, der etwa senkrecht zur angrenzenden Oberfläche des Gehäuses 2 angeordnet ist und an seinem freien oberen Ende ein Betätigungsteil 23 aufweist, das durch einen Durchbruch 4 im Gehäuse 2 über die Oberfläche desselben hinausragt und zur manuellen Betätigung des ersten Schaltorgans 10 dient.

Der erste Schenkel 21 des ersten Schaltorgans 10 steht senkrecht auf einem zweiten Schenkel 22, der in Verstellrichtung des ersten Schaltorgans 10 angeordnet ist.

In Fig. 1 steht das erste Schaltorgan 10 in einer ersten Position A, und der das erste Verriegelungsglied 13 bildende Vorsprung des Auslöseglieds 14 liegt an einer zum Auslöseglied 14 weisenden Anlagefläche 18 an der Vorderseite des ersten Schaltorgans 10 an und blokkiert dadurch das erste Schaltorgan 10. In der in Fig. 1 gezeigten ersten Stellung A kann damit das erste Schaltorgan 10 nicht betätigt werden. Ein Dauerbetrieb des Antriebs für das langsam laufende Werkzeug kann damit nicht eingeschaltet werden.

Dagegen läßt sich in der Position A des ersten Schaltorgans 10 mit dem zweiten Schaltorgan 12 der Antrieb des schnell laufenden Werkzeugs in einen Kurzzeitbetrieb einschalten, da ein von der Unterseite des zweiten Schaltorgans 12 abstehender Stift 17 in eine in dieser Position A mit dem Stift 17 fluchtende Bohrung 16 des Schenkels 22 des ersten Schaltorgans 10 einführbar ist. Durch Druck auf einen durch eine Bohrung 5 des Gehäuses 2 ragenden Druckknopf 29 des zweiten Schaltorgans 12 kann damit der Kurzzeitbetrieb aktiviert werden.

Bei der in der Fig. 1 gezeigten Ruheposition I des Auslöseglieds 14 und der Position A des ersten Schaltorgans 10 wird mit Hilfe der am Auslöseglied 14 und der am ersten und zweiten Schaltorgan 10 und 12 ausgebildeten Verriegelungsglieder verhindert, daß ein Dauerbetrieb durch Betätigung des ersten Schaltorgans 10 aktiviert werden kann. Gleichzeitig wird die Aktivierung des Kurzzeitbetriebs durch das zweite Schaltorgan 12 freigegeben.

Des weiteren wird in der in der Fig. 1 gezeigten Betriebsstellung des Handrührers unter anderem durch das Federelement 9 verhindert, daß das Auslöseglied 14 nach oben bewegt wird. Dies kann nur durch einen eingesteckten Rühr- oder Knethaken 3 bewirkt werden.

In der in Fig. 2 gezeigten oberen Position II des Auslöseglieds 14, in der ein Rühr- oder Knethaken 3 in die mit dem Auslöseglied 14 verbundene Werkzeugaufnahme eingesteckt ist, kann der das erste Verriegelungsglied 13 bildende Vorsprung in eine Ausnehmung oder Bohrung 15 im ersten Schenkel 21 des ersten Schaltorgans 10 eingreifen. Damit kann das erste Schaltorgan 10 mit seinem Betätigungsteil 23 manuell in Richtung zum Auslöseglied 14 gedrückt und damit in die Dauerbetriebsart geschaltet werden. Dies ist die Position B des ersten Schaltorgans 10.

Durch die gegenseitige Verriegelung des Vorsprungs 13 und der Bohrung oder Ausnehmung 15 wird außerdem verhindert, daß das Auslöseglied 14 bei aktivierter Dauerbetriebsart mit dem Auslöseknopf 11 zum Auslösen des Knet- oder Rührhakens 3 betätigbar ist. Der Rühroder Knethaken 3 kann damit in dieser Position B nicht über den Auslöseknopf 11 ausgeworfen werden.

Der dem zweiten Schenkel 22 des ersten Schaltorgans 10 zugeordnete Stift 17 des zweiten Schaltorgans 12 liegt in der in Fig. 2 gezeigten Position B des ersten Schaltorgans 10 stirnseitig an dem als eine Anschlagfläche 28 ausgebildeten freien Ende des zweiten Schenkels 22 des ersten Schaltorgans 10 an, so daß die Aktivierung des Kurzzeitbetriebs durch das zweite Schaltorgan 12 blockiert ist.

In Fig. 1 und Fig. 2 ist zu erkennen, daß der Auslöseknopf 11 des Auslöseglieds 14, das Betätigungsteil 23 des ersten Schaltorgans 10 und der Druckknopf 29 des zweiten Schaltorgans 12 unmittelbar benachbart im oberen Teil des Gehäuses 2 angeordnet sind, so daß diese Betätigungsorgane, d.h. der Auslöseknopf 11, das Betätigungsteil 23 und der Druckknopf 29 von einem Benutzer mit dem Daumen betätigbar sind, ohne daß die durch den Freiraum 7 greifende Hand des Benutzers ihre Lage am Handrührer verändern muß.

Die zuvor beschriebenen Sicherheitsmaßnahmen werden in dem Handrührer mit rein mechanischen Maßnahmen, d.h. durch eine einfache mechanische Gestaltung des am Auslöseglied 14 sitzenden Vorsprungs 13, des ersten Schaltorgans 10 in Verbindung mit dem zweiten Schaltorgan 12, dessen Betätigungsrichtung senkrecht auf der Verstellrichtung des ersten Schaltorgans 10 steht, erreicht.

## Patentansprüche

1. Elektrisch betriebener Handrührer zum Bearbeiten von Nahrungsmitteln, mit an einem Gehäuse (2) verstellbar angeordneten Schaltmitteln mit unterschiedlichen Schaltstellungen zur Aktivierung eines Dauerbetriebs und eines Kurzzeitbetriebs, mit Werkzeugaufnahmen zur Halterung verschiedener Werkzeuge, beispielsweise eines Rühroder Knethakens (3) oder eines Pürierstabs, wobei zwei Schaltorgane (10, 12) vorgesehen sind, von denen jeweils eines der Schaltorgane (10, 12) der Aktivierung des Dauerbetriebs und des Kurzzeitbetriebs zugeordnet ist,
**dadurch gekennzeichnet,**
**daß** die beiden Schaltorgane (10, 12) sowie ein Auslöseglied (14) zum Auswerfen eines in einer der Werkzeugaufnahmen gehaltenen Werkzeugs derart mechanisch miteinander gekoppelt sind, daß immer nur eines der beiden Schaltorgane (10, 12) betätigbar ist.

2. Handrührer nach Anspruch 1,
**dadurch gekennzeichnet,**
**daß** das erste Schaltorgan (10) ein einem ersten Verriegelungsglied (13) des Auslöseglieds (14) zugeordnetes zweites Verriegelungsglied (15, 18) aufweist, und daß die ersten und zweiten Verriegelungsglieder (13, 15, 18) derart ineinander eingreifen, daß sie in einer unteren Ruhestellung (I) des Auslöseglieds (14) eine Verstellung des ersten Schaltorgans (10) aus einer ersten Position (A) desselben, in der der Dauerbetrieb unterbunden ist, blockieren, und daß sie in einer oberen Stellung (II) des Auslöseglieds (14) die Verstellung des ersten Schaltorgans (10) von seiner ersten Position (A) in eine zweite Position (B), in der der Dauerbetrieb aktivierbar ist, freigeben.

3. Handrührer nach Anspruch 2,
**dadurch gekennzeichnet,**
**daß** das erste Schaltorgan (10) ein zum zweiten Schaltorgan (12) ausgerichtetes Verriegelungsglied (16) aufweist, daß das zweite Schaltorgan (12) ein dem Verriegelungsglied (16) zugeordnetes und mit diesem zusammenwirkendes Verriegelungsglied (17) aufweist, und daß die Verriegelungsglieder (16, 17) derart zusammenwirken, daß das zweite Schaltorgan (12) zur Aktivierung des Kurzzeitbetriebs freigegeben ist, wenn sich das Auslöseglied (14) in seiner unteren Ruheposition (I) befindet, wobei die ersten und zweiten Verriegelungsglieder (13, 15, 18) dabei das erste Schaltorgan (10) blokkieren, und daß das zweite Schaltorgan (12) blockiert ist, wenn das Auslöseglied (14) in seiner oberen Position (II) steht, wobei die ersten und zweiten Verriegelungsglieder (13, 15, 18) dabei das erste Schaltorgan (10) zur Aktivierung des Dauerbetriebs freigeben.

4. Handrührer nach einem der vorstehenden Ansprüche,
**dadurch gekennzeichnet,**
**daß** das erste Schaltorgan (10) parallel zu einer an ihm angrenzenden Oberfläche des Gehäuses (2) verstellbar gelagert ist, und daß ein Schenkel (21) des Schaltorgans (10) ein durch einen Durchbruch (4) in dem Gehäuse (2) über dasselbe hinausragendes Betätigungsteil (23) zur manuellen Betätigung des ersten Schaltorgans (10) aufweist.

5. Handrührer nach Anspruch 4,
**dadurch gekennzeichnet,**
**daß** das erste Schaltorgan (10) mit einem zweiten Schenkel (22) versehen ist, daß der erste und zweite Schenkel (21, 22) etwa senkrecht aufeinander stehen, wobei der erste Schenkel (21) etwa senkrecht zur angrenzenden Oberfläche des Gehäuses (2) und der zweite Schenkel (22) etwa parallel zu dieser Oberfläche ausgerichtet ist.

6. Handrührer nach einem der Ansprüche 2 bis 5,
**dadurch gekennzeichnet,**
**daß** das erste Verriegelungsglied (13) einen mit dem Auslöseglied (14) verbundenen Vorsprung aufweist, und daß das zweite Verriegelungsglied (15, 18) eine zum Auslöseglied (14) weisende Anlagefläche (18) und eine unmittelbar an die Anlagefläche (18) anschließende Ausnehmung oder Bohrung (15) aufweist, wobei das freie Ende des ersten Verriegelungsglieds (13) in der unteren Ruheposition (I) des Auslöseglieds (14) an der Anlagefläche (18) des zweiten Verriegelungsglieds (13) anliegt und in der oberen Stellung (II) des Auslöseglieds (14) in die Ausnehmung oder Bohrung (15) des zweiten Verriegelungsglieds eingreift.

7. Handrührer nach einem der vorstehenden Ansprüche,
**dadurch gekennzeichnet,**
**daß** das zweite Schaltorgan (12) in senkrechter Richtung zur angrenzenden Oberfläche des Gehäuses (2) betätigbar ist und einen durch eine Bohrung (5) in der Oberfläche ragenden, manuell zu betätigenden Druckknopf (29) sowie einen senkrecht zum Verstellweg des ersten Schaltorgans (10) ausgerichteten Stift (17) aufweist.

8. Handrührer nach Anspruch 7,
**dadurch gekennzeichnet,**
**daß** der Stift einer Bohrung (16) des ersten Schaltorgans (10) zugeordnet ist, wobei der Stift in der Ruhestellung (I) des Auslöseglieds (14) in die Bohrung (16) einführbar ist, während dies in der oberen Stellung (II) des Auslöseglieds (14) bei betätigtem erstem Schaltorgan (10) nicht möglich ist.

9. Handrührer nach den Ansprüchen 4 und 7,
**dadurch gekennzeichnet,**
**daß** das Betätigungsteil (23) und der Druckknopf (29) einander unmittelbar benachbart angeordnet sind.

## Claims

1. An electric hand mixer for processing foodstuffs, with switching arrangements adjustably arranged on a housing (2) and featuring different settings for activation of a continuous-on mode and a pulse mode, with tool mounts for holding various tools including, for example, a mixing or kneading tool (3) or a puréeing wand, wherein provision is made for two switching devices (10, 12), one of which is associated with the activation of the continuous-on mode and the other of which is associated with the activation of the pulse mode,
**characterised in that**
the two switching devices (10, 12) and a lock release element (14) for ejecting a tool held in one of the tool mounts being mechanically coupled to each other so that only one of the two switching devices (10, 12) can be actuated at a time.

2. The hand mixer according to claim 1,
**characterised in that**
the first switching device (10) includes a second interlocking member (15, 18) associated with a first interlocking member (13) of the lock release element (14), and **in that** the first and second interlocking members (13, 15, 18) interengage in such fashion as to block, in a lower idle position (I) of the lock release element (14), adjustment of the first switching device (10) from a first position (A) in which the continuous-on mode is inhibited, while enabling, in an upper position (II) of the lock release element (14), adjustment of the first switching device (10) from its first position (A) to a second position (B) in which the continuous-on mode can be activated.

3. The hand mixer according to claim 2,
**characterised in that**
the first switching device (10) includes an interlocking member (16) aligned relative to the second switching device (12), **in that** the second switching device (12) includes an interlocking member (17) associated and cooperating with the interlocking member (16), and **in that** the interlocking members (16, 17) cooperate in such manner that the second switching device (12) for activating the pulse mode is enabled when the lock release element (14) is in its lower idle position (I) wherein the first and second interlocking members (13, 15, 18) block the first switching device (10), and **in that** the second switching device (12) is disabled when the lock release element (14) occupies its upper position (II) wherein the first and second interlocking members (13, 15, 18) release the first switching device (10) for activating the continuous-on mode.

4. The hand mixer according to any one of the preceding claims,
**characterised in that**
the first switching device (10) is mounted for adjustment parallel to an adjoining surface of the housing (2), and **in that** a leg (21) of the switching device (10) includes an actuating member (23) for manual operation of the first switching device (10), said actuating member projecting through a cutout (4) in the housing (2) and beyond said housing (2).

5. The hand mixer according to claim 4,
**characterised in that**
the first switching device (10) comprises a second leg (22), and that the first and the second leg (21, 22) are approximately mutually perpendicular to each other, with the first leg (21) being aligned approximately vertically to the adjoining surface of the housing (2), and the second leg (22) being aligned approximately parallel to said surface.

6. The hand mixer according to any one of claims 2 to 5,
**characterised in that**
the first interlocking member (13) comprises a projection connected with the lock release element (14), and **in that** the second interlocking member (15, 18) comprises a seating surface (18) facing the lock release element (14) and a recess or borehole (15) directly adjacent to the seating surface (18), with the free end of the first interlocking member (13) engaging the seating surface (18) of the second interlocking member (13) when the lock release element (14) is in the lower idle position (I), whilst engaging the recess or borehole (15) of the second interlocking member when the lock release element (14) is in the upper position (II).

7. The hand mixer according to any one of the preceding claims,
**characterised in that**
the second switching device (12) can be actuated in a direction vertical to the adjoining surface of the housing (2) and includes a manually operable pushbutton (29) extending through a borehole (5) in the surface, and a pin (17) oriented vertically to the direction of adjustment of the first switching device (10).

8. The hand mixer according to claim 7,
**characterised in that**
the pin is associated with a borehole (16) of the first switching device (10), said pin being insertable into the borehole (16) when the lock release element (14) is in the idle position (I), whilst this is not possible in the upper position (II) of the lock release element (14) when the first switching device (10) is actuated.

9. The hand mixer according to claims 4 and 7,
**characterised in that**
the actuating member (23) and the pushbutton (29) are arranged in close proximity to each other.

## Revendications

1. Batteur portable actionné électriquement, pour le traitement d'aliments, comportant des moyens de commutation agencés de manière mobile sur un boîtier (2) et présentant différentes positions de commutation pour l'activation d'un fonctionnement continu et d'un fonctionnement de courte durée, comportant des logements d'outil pour retenir différents outils, par exemple un crochet de mélange ou de malaxage (3) ou une barre à purée, dans lequel sont prévus deux organes de commutation (10, 12) dont respectivement un des organes de commutation (10, 12) est associé à l'activation du fonctionnement continu et du fonctionnement de courte durée,
***caractérisé en ce que*** les deux organes de commutation (10, 12) ainsi qu'un élément de libération (14) pour l'éjection d'un outil retenu dans un des logements d'outil sont accouplés mécaniquement l'un à l'autre de manière à ce que, à tout moment, seul un des deux organes de commutation (10, 12) peut être actionné.

2. Batteur portable suivant la revendication 1, **caractérisé en ce que** le premier organe de commutation (10) présente un second élément de verrouillage (15, 18) associé à un premier élément de verrouillage (13) de l'élément de libération (14), et **en ce que** les premier et second éléments de verrouillage (13, 15, 18) pénètrent l'un dans l'autre de façon à ce qu'ils bloquent, dans une position de repos inférieure (l) de l'élément de libération (14) un déplacement du premier organe de commutation (10) à partir d'une première position (A) de celui-ci dans laquelle le fonctionnement continu est entravé, et **en ce qu'**ils libèrent dans une position supérieure (Il) de l'élément de libération (14) le déplacement du premier organe de commutation (10) depuis sa première position (A) dans une seconde position (B) dans laquelle le fonctionnement continu peut être activé.

3. Batteur portable suivant la revendication 2, **caractérisé en ce que** le premier organe de commutation (10) présente un élément de verrouillage (16) orienté vers le second organe de commutation (12), **en ce que** le second organe de commutation (12) présente un élément de verrouillage (17) associé à l'élément de verrouillage (16) et coopérant avec celui-ci, et **en ce que** les éléments de verrouillage (16, 17) coopèrent de façon à ce que le second organe de commutation (12), pour l'activation du fonctionnement de courte durée, soit libéré lorsque l'élément de libération (14) se trouve dans sa position inférieure de repos (I), les premier et second éléments de verrouillage (13, 15, 18) bloquant alors le premier organe de commutation (10), et **en ce que** le second organe de commutation (12) est bloqué lorsque l'élément de libération (14) est dans sa position supérieure (II), les premier et second éléments de verrouillage (13, 15, 18) libérant alors le premier organe de commutation (10) pour l'activation du fonctionnement continu.

4. Batteur portable suivant l'une des revendications précédentes, **caractérisé en ce que** le premier organe de commutation (10) est monté de manière déplaçable parallèlement à une surface qui l'avoisine du boîtier (2), et **en ce qu'**une aile (21) de l'organe de commutation (10) présente, pour l'actionnement manuel du premier organe de commutation (10), une partie d'actionnement (23) qui fait saillie à travers une ouverture (4) dans le bottier (2) au-delà de celuic-i.

5. Batteur portable suivant la revendication 4, **caractérisé en ce que** le premier organe de commutation (10) est équipé d'une seconde aile (22), et **en ce que** les première et seconde ailes (21, 22) sont approximativement perpendiculaires l'une par rapport à l'autre, la première aile (21) étant orientée approximativement perpendiculairement à la surface avoisinante du boîtier (2) et la seconde aile (22) étant orientée approximativement parallèlement à cette surface.

6. Batteur portable suivant l'une des revendications 2 à 5 **caractérisé en ce que** le premier élément de verrouillage (13) présente une saillie reliée à l'élément de libération (14), et **en ce que** le second élément de verrouillage (15, 18) présente une surface de butée (18) pointant vers l'élément de libération (14) et un évidement ou trou (15) qui se raccorde directement à la surface de butée (18), l'extrémité libre du premier élément de verrouillage (13) étant en appui, dans la position de repos inférieure (I) de l'élément de libération (14), contre la surface de butée (18) du second élément de verrouillage (13) et pénétrant, dans la position supérieure (II) de l'élément de libération (14), dans l'évidement ou trou (15) du second élément de verrouillage.

7. Batteur portable suivant l'une des revendications précédentes, **caractérisé en ce que** le second organe de commutation (12) peut être actionné dans une direction perpendiculaire à la surface avoisinante du boîtier (2) et présente un bouton poussoir (29), à actionner manuellement et faisant saillie à travers un trou (5) dans la surface, ainsi qu'une broche (17) orientée perpendiculairement au trajet de déplacement du premier organe de commutation (10).

8. Batteur portable suivant la revendication 7, **caractérisé en ce que** la broche est associée à un trou (16) du premier organe de commutation (10), la broche pouvant être introduite dans le trou (16) dans la position de repos (I) de l'élément de libération (14) alors que ceci n'est pas possible, dans la position supérieure (II) de l'élément de libération (14) lorsque le premier organe de commutation (10) est actionné.

9. Batteur portable suivant l'une des revendications 4 et 7 **caractérisé en ce que** l'élément d'actionnement (23) et le bouton poussoir (29) sont agencés directement au voisinage l'un de l'autre.
